# EUROPEAN PATENT APPLICATION

(11) **EP 4 707 104 A1**
(43) Date of publication of application: **11.03.2026**
(21) Application number: 24810462.2
(22) Date of filing: 23.05.2024
(51) Int. Cl.: B60W 30/18, B60W 40/06, B60L 15/20

(54) **VEHICLE CONTROL METHOD AND APPARATUS**

(30) Priority: 25.05.2023 CN 202310609829
(71) Applicant: Shenzhen Yinwang Intelligent Technologies Co., Ltd., Shenzhen, Guangdong 518110 (CN)
(72) Inventor: LIU, Hanwen, Shenzhen, Guangdong 518129 (CN); GUO, Zhenhua, Shenzhen, Guangdong 518129 (CN); FAN, Yuwei, Shenzhen, Guangdong 518129 (CN)
(74) Representative: Maiwald GmbH
(86) International application number: PCT/CN2024/094964
(87) International publication number: WO 2024/240225

(57) **Abstract**

A vehicle control method is disclosed, and relates to the field of vehicle technologies. The method includes: obtaining a road surface characteristic of a first area, where the first area includes an area into which a vehicle is to travel at a future first moment; determining target torque control information based on the road surface characteristic; and controlling, based on the target torque control information, the vehicle to travel. The method may be used to adaptively adjust a control parameter of a vehicle-related component, to ensure smoothness and comfort of vehicle driving. A vehicle control apparatus is further disclosed.

## Description

### CROSS-REFERENCE TO RELATED APPLICATIONS

This application claims priority to Chinese Patent Application No. 202310609829.0, filed with the China National Intellectual Property Administration on May 25, 2023 and entitled "VEHICLE CONTROL METHOD AND APPARATUS", which is incorporated herein by reference in its entirety.

### TECHNICAL FIELD

This application relates to the field of vehicle technologies, and in particular, to a vehicle control method and apparatus.

### BACKGROUND

At present, development of new energy vehicles has attracted significant attention from countries around the world. A vehicle, for example, a new energy vehicle, is usually controlled to travel by controlling output torque of a motor.

However, in real-world road conditions, which can be highly complex, when the vehicle passes through a special road surface like a pothole, a speed bump, or an icy and snowy road section, sudden changes in road adhesion can cause the vehicle to become unstable. If a control parameter of a vehicle-related component (for example, the output torque of the motor) fails to promptly adapt to these sudden changes in road adhesion, a user may experience noticeable jerking or forward lurching, even leading to slipping, fishtailing, understeering (or oversteering), and the like. This affects smoothness and comfort during vehicle traveling, and results in a subpar driving experience to the user.

Therefore, how to adaptively adjust the control parameter of the vehicle-related component to ensure smoothness and comfort during vehicle traveling is still an important problem that needs to be urgently resolved.

### SUMMARY

Embodiments of this application provide a vehicle control method and apparatus, to adaptively adjust a control parameter of a vehicle-related component, to ensure smoothness and comfort during vehicle traveling.

According to a first aspect, an embodiment of this application provides a vehicle control method. The method may be implemented by a vehicle control apparatus. The vehicle control apparatus may be deployed on a vehicle side, for example, may be a control unit that implements vehicle control, for example, a vehicle control unit (vehicle control unit, VCU) of a vehicle or a vehicle domain controller (vehicle domain controller, VDC), or may be a control unit that is configured to implement an intelligent driving function or a driving assistance function, for example, an intelligent driving domain control unit or a mobile data center (mobile data center, MDC). A product form of the vehicle control apparatus is not limited in embodiments of this application. The vehicle is driven by a motor to travel, and may be a pure electric vehicle, a hybrid electric vehicle, a two-wheel drive electric vehicle, or a four-wheel drive electric vehicle. A driving manner of the vehicle is not limited in embodiments of this application.

During specific implementation, the method may include: obtaining a road surface characteristic of a first area, where the first area includes an area into which the vehicle is to travel at a future first moment; determining target torque control information based on the road surface characteristic; and controlling, based on the target torque control information, the vehicle to travel.

For example, the target torque control information may include a target torque control strategy in one or more torque control strategies associated with the road surface characteristic of the first area. Alternatively, the target torque control information may include a value of an adjusted corresponding control parameter obtained through calculation based on the target torque control strategy. Content of the target torque control information is not limited in embodiments of this application.

According to the foregoing method, the vehicle control apparatus may adaptively determine the target torque control information of the vehicle by obtaining the road surface characteristic of the first area, to adaptively adjust a related control parameter of the vehicle. In this way, when the vehicle control apparatus provides the adjusted control parameter to a corresponding component of the vehicle, the vehicle control apparatus can assist the vehicle in safe traveling. In this way, smoothness and stability during vehicle traveling are ensured.

It should be noted that, in this embodiment of this application, if the vehicle is to travel into a paved road surface at the first moment, the first area may include a lane area or a parking space into which the vehicle is to travel. If the vehicle is to travel into a non-paved road surface at the first moment, for example, an idle area in which no lane or parking space is planned, or an off-road road surface, the first area may include any area in which the vehicle is allowed to pass. A specific range of the first area is not limited in embodiments of this application.

With reference to the first aspect, in a possible implementation, the determining the target torque control information based on the road surface characteristic includes: identifying, based on the road surface characteristic, a first scenario in which the vehicle is located; and determining the target torque control information according to at least one torque control strategy associated with the first scenario.

According to the foregoing method, the road surface characteristic, the scenario, and the at least one torque control strategy may be associated in advance. During specific implementation, the vehicle control apparatus may determine, based on an association relationship between an identified road surface characteristic and an identified scenario, the first scenario in which the vehicle is currently located, so that the target torque control information may be determined based on the torque control strategy associated with the first scenario.

The scenario matching solution described herein is merely an example description of determining the target torque control information, and does not constitute any limitation in this embodiment of this application. In another embodiment, the road surface characteristic may be associated with the at least one torque control strategy in advance. After identifying the road surface characteristic, the vehicle control apparatus may determine the target torque control information based on an association relationship between the road surface characteristic and the at least one torque control strategy. This is not limited in embodiments of this application.

With reference to the first aspect, in a possible implementation, the method may further include: determining, in any one of the following manners, the at least one torque control strategy associated with the first scenario: determining, based on first information, the at least one torque control strategy associated with the first scenario, where the first information is used to describe an association relationship (or referred to as a mapping relationship) between different road surface scenarios and different torque control strategies; or determining, based on a first parameter value associated with the first scenario, the at least one torque control strategy associated with the first scenario, where the first parameter value represents a degree of impact of the road surface characteristic of the first area on traveling stability of the vehicle.

According to the foregoing method, a vehicle control unit may determine, based on the first information pre-stored in a storage medium accessible by the vehicle control apparatus, the torque control strategy associated with the first scenario, or may determine, by evaluating the first parameter value associated with the first scenario, the torque control strategy associated with the first scenario, to improve overall vitality of a vehicle control solution.

With reference to the first aspect, in a possible implementation, the first parameter value includes a road adhesion coefficient and/or a slip rate. In another implementation, the first parameter value may alternatively be replaced with a value of another parameter that affects traveling stability or safety of the vehicle. This is not limited in embodiments of this application.

With reference to the first aspect, in a possible implementation, the at least one torque control strategy associated with the first scenario is used to adjust at least one of the following control parameters: a total torque value, a torque gradient, an inter-axle torque distribution proportion, or a brake electro-hydraulic distribution proportion. For example, each torque control strategy is associated with an adjustment coefficient, and the adjustment coefficient is used to decrease a value of a control parameter to be adjusted according to the torque control strategy. This is merely an example description of the control parameter, and does not constitute any limitation in this embodiment of this application. In another embodiment, the vehicle control apparatus may further adaptively adjust another control parameter, for example, a traveling speed of the vehicle and a steering wheel angle, to ensure traveling stability of the vehicle. This is not limited in embodiments of this application.

With reference to the first aspect, in a possible implementation, the identifying, based on the road surface characteristic, the first scenario in which the vehicle is located includes: matching the road surface characteristic with at least one piece of scenario information, to identify the first scenario, where the scenario information is used to describe a road surface scenario, an area corresponding to the first scenario includes a first road surface characteristic, a second parameter value associated with the first road surface characteristic is greater than or equal to a first threshold, and the second parameter value represents a degree of impact of the first road surface characteristic on the traveling stability of the vehicle.

According to the foregoing method, the at least one piece of scenario information may be stored in a storage medium accessible by the vehicle control apparatus, and the vehicle control apparatus may match an identified road surface characteristic with the at least one piece of scenario information to identify the first scenario. In this way, the target torque control information is determined by using the at least one torque control strategy associated with the first scenario, to assist the vehicle in traveling.

In this embodiment of this application, scenario information used to describe a road surface scenario may be a scenario name. The scenario name may be named by using a road surface characteristic, for example, "speed bump", "manhole cover", "temperature joint", "road surface damage", "separated road surface", "waterlogged road surface", and "wet epoxy coating". Different road surface scenarios may further have corresponding scenario codes (or referred to as scenario identifiers). This is not limited in embodiments of this application.

Fine-grained scenario information for describing a road surface scenario may include more than a scenario name. For example, for each scenario, the degree of impact on the traveling stability of the vehicle can be categorized into layers based on different road surface characteristics, and the scenario information may further include road surface characteristics at different levels.

A "speed bump" scenario is used as an example. Using an elevation of a speed bump as a classification criterion, the "speed bump" scenario may be classified into a "level 1 speed bump" scenario, a "level 2 speed bump" scenario, and a "level 3 speed bump" scenario, which respectively correspond to elevation ranges of 0 centimeters to X1 centimeters (cm), X1 cm to X2 cm, and X2 cm to X3 cm, where X1, X2, and X3 represent elevation values, and X1<X2<X3. Scenario information corresponding to the level 1 speed bump scenario may be represented as follows: speed bump, elevation, level 1, and 0 centimeters to X1 centimeters. Scenario information corresponding to the level 2 speed bump scenario may be represented as follows: speed bump, elevation, level 2, and X1 centimeters to X2 centimeters. Scenario information corresponding to the level 3 speed bump scenario may be represented as follows: speed bump, elevation, level 3, and X2 centimeters to X3 centimeters. After identifying the "speed bump" scenario, the vehicle control apparatus may more precisely identify an elevation value of the speed bump, and match the elevation value with elevation ranges in the foregoing different speed bump scenarios, to determine a specific speed bump classification scenario. In this way, the target torque control information is determined by using the at least one torque control strategy associated with the corresponding classification scenario. For detailed descriptions, refer to the part of the specific implementations. Details are not described herein.

With reference to the first aspect, in a possible implementation, the method may further include: receiving the at least one piece of scenario information from a cloud server; or receiving the at least one piece of scenario information from user equipment UE. In other words, the vehicle control apparatus may obtain the at least one piece of scenario information in a plurality of manners. The at least one piece of scenario information may be actively requested by the vehicle control apparatus, or may be passively received by the vehicle control apparatus, for example, through server configuration or manual configuration. This is not limited in embodiments of this application.

With reference to the first aspect, in a possible implementation, the method may further include: obtaining a traveling parameter of the vehicle; and the identifying, based on the road surface characteristic, the first scenario in which the vehicle is located includes: identifying, based on the road surface characteristic and the traveling parameter, the first scenario in which the vehicle is located.

According to the foregoing method, whether the vehicle actually travels on a road surface that affects stability of the vehicle is also a very important factor for traveling control of the vehicle. Therefore, the vehicle control apparatus may further obtain a traveling parameter of the vehicle. In this way, a traveling intent of the vehicle at the future first moment is predicted with reference to the traveling parameter, to identify the first scenario in which the vehicle is located at the first moment. If the vehicle actually travels on the road surface that affects the stability of the vehicle at the future first moment, the vehicle control apparatus may determine the target torque control information according to the at least one torque control strategy associated with the first scenario. If the vehicle does not actually travel on the road surface that affects the stability of the vehicle at the future first moment, the vehicle control apparatus does not need to adaptively adjust a corresponding control parameter with reference to a road surface characteristic. In this way, it is more accurate for the vehicle control apparatus to identify, based on the road surface characteristic and the traveling parameter, the first scenario in which the vehicle is located.

With reference to the first aspect, in a possible implementation, the traveling parameter may include but is not limited to at least one of the following: a traveling speed, a wheel speed, a yaw rate, longitudinal acceleration, a roll angle, a steering wheel angle, a heading angle, accelerator pedal opening information, brake pedal opening information, a gear, a driving mode, a road mode, and a battery state of charge SOC. This is merely an example but not any limitation on the traveling parameter that may be required for predicting the traveling intent of the vehicle. In another embodiment, the traveling parameter may further include another example that is not shown. Details are not described herein.

With reference to the first aspect, in a possible implementation, the obtaining the road surface characteristic of the first area includes: obtaining the road surface characteristic of the first area via at least one sensor associated with the vehicle.

With reference to the first aspect, in a possible implementation, the controlling, based on the target torque control information, the vehicle to travel includes: sending a control instruction to a target component of the vehicle, where the target component includes at least one of the following: a motor control unit, an electronic stability controller ESC, or a brake system.

This is merely an example description of the target component of the vehicle, and does not constitute any limitation. In another embodiment, the target component may alternatively have another name, or the control parameter may be replaced with another parameter. Correspondingly, the target component may alternatively be replaced with a control component corresponding to the another parameter. This is not limited in embodiments of this application.

According to a second aspect, an embodiment of this application provides a vehicle control method. The method may be implemented by a vehicle control apparatus. The vehicle control apparatus may be deployed on a vehicle side, for example, may be a control unit configured to implement vehicle control, for example, a VCU or a VDC of a vehicle. Alternatively, the vehicle control apparatus may be a control unit configured to implement an intelligent driving function or a driving assistance function, for example, an intelligent driving domain control unit or an MDC. A product form of the vehicle control apparatus is not limited in embodiments of this application. The vehicle is driven by a motor to travel, and may be a pure electric vehicle, a hybrid electric vehicle, a two-wheel drive electric vehicle, or a four-wheel drive electric vehicle. A driving manner of the vehicle is not limited in embodiments of this application.

During specific implementation, the method may include: obtaining first scenario information, where the first scenario information indicates a first scenario of a vehicle; determining target torque control information according to at least one torque control strategy associated with the first scenario; and controlling, based on the target torque control information, the vehicle to travel.

According to the foregoing method, the vehicle control apparatus may learn of, by obtaining the first scenario information, the first scenario in which the vehicle is located, to adaptively determine the target torque control information according to the at least one torque control strategy associated with the first scenario, so as to adaptively adjust a related control parameter of the vehicle. In this way, when the vehicle control apparatus provides the adjusted control parameter to a corresponding component of the vehicle, the vehicle control apparatus can assist the vehicle in safe traveling. In this way, smoothness and stability during vehicle traveling are ensured.

With reference to the second aspect, in a possible implementation, the method may further include: determining, in any one of the following manners, the at least one torque control strategy associated with the first scenario: determining, based on first information, the at least one torque control strategy associated with the first scenario, where the first information is used to describe an association relationship between different road surface scenarios and different torque control strategies; or determining, based on a first parameter value associated with the first scenario, the at least one torque control strategy associated with the first scenario, where the first parameter value represents a degree of impact of a road surface characteristic of a first area on traveling stability of the vehicle.

With reference to the second aspect, in a possible implementation, the first parameter value includes a road adhesion coefficient and/or a slip rate.

With reference to the second aspect, in a possible implementation, the at least one torque control strategy associated with the first scenario is used to adjust at least one of the following control parameters: a total torque value, a torque gradient, an inter-axle torque distribution proportion, or a brake electro-hydraulic distribution proportion.

With reference to the second aspect, in a possible implementation, each torque control strategy is associated with an adjustment coefficient, and the adjustment coefficient is used to decrease a value of a control parameter to be adjusted according to the torque control strategy.

With reference to the second aspect, in a possible implementation, the obtaining the first scenario information includes: receiving the first scenario information from an intelligent driving domain control unit MDC, where the first scenario is obtained through identifying based on the road surface characteristic of the first area, and the first area includes an area into which the vehicle is to travel at a future first moment.

With reference to the second aspect, in a possible implementation, the method further includes: obtaining a traveling parameter of the vehicle; and the obtaining the first scenario information includes: performing scenario identification based on the traveling parameter and the road surface characteristic of the first area, to obtain the first scenario information, where the first area includes an area into which the vehicle is to travel at a future first moment.

With reference to the second aspect, in a possible implementation, the traveling parameter may include but is not limited to at least one of the following: a traveling speed, a wheel speed, a yaw rate, longitudinal acceleration, a roll angle, a steering wheel angle, a heading angle, accelerator pedal opening information, brake pedal opening information, a gear, a driving mode, a road mode, and a battery state of charge SOC.

With reference to the second aspect, in a possible implementation, the controlling, based on the target torque control information, the vehicle to travel includes: sending a control instruction to a target component of the vehicle, where the target component includes at least one of the following: a motor control unit, an electronic stability controller ESC, or a brake system.

According to a third aspect, an embodiment of this application provides a vehicle control apparatus, including: an obtaining unit, configured to obtain a road surface characteristic of a first area, where the first area includes an area into which a vehicle is to travel at a future first moment; a determining unit, configured to determine target torque control information based on the road surface characteristic; and a control unit, configured to control, based on the target torque control information, the vehicle to travel.

With reference to the third aspect, in a possible implementation, the determining unit is specifically configured to: identify, based on the road surface characteristic, a first scenario in which the vehicle is located; and determine the target torque control information according to at least one torque control strategy associated with the first scenario.

With reference to the third aspect, in a possible implementation, the determining unit is further configured to determine, in any one of the following manners, the at least one torque control strategy associated with the first scenario: determining, based on stored first information, the at least one torque control strategy associated with the first scenario, where the first information is used to describe an association relationship between different road surface scenarios and different torque control strategies; or determining, based on a first parameter value associated with the first scenario, the at least one torque control strategy associated with the first scenario, where the first parameter value represents a degree of impact of the road surface characteristic of the first area on traveling stability of the vehicle.

With reference to the third aspect, in a possible implementation, the first parameter value includes a road adhesion coefficient and/or a slip rate.

With reference to the third aspect, in a possible implementation, the at least one torque control strategy associated with the first scenario is used to adjust at least one of the following control parameters: a total torque value, a torque gradient, an inter-axle torque distribution proportion, or a brake electro-hydraulic distribution proportion.

With reference to the third aspect, in a possible implementation, each torque control strategy is associated with an adjustment coefficient, and the adjustment coefficient is used to decrease a value of a control parameter to be adjusted according to the torque control strategy.

With reference to the third aspect, in a possible implementation, the determining unit is specifically configured to: match the road surface characteristic with at least one piece of scenario information, to identify the first scenario, where the scenario information is used to describe a road surface scenario, an area corresponding to the first scenario includes a first road surface characteristic, a second parameter value associated with the first road surface characteristic is greater than or equal to a first threshold, and the second parameter value represents a degree of impact of the first road surface characteristic on the traveling stability of the vehicle.

With reference to the third aspect, in a possible implementation, the apparatus further includes a transceiver unit, configured to: receive the at least one piece of scenario information from a cloud server; or receive the at least one piece of scenario information from user equipment UE.

With reference to the third aspect, in a possible implementation, the obtaining unit is further configured to obtain a traveling parameter of the vehicle; and the processing unit is specifically configured to identify, based on the road surface characteristic and the traveling parameter, the first scenario in which the vehicle is located.

With reference to the third aspect, in a possible implementation, the traveling parameter includes but is not limited to at least one of the following: a traveling speed, a wheel speed, a yaw rate, longitudinal acceleration, a roll angle, a steering wheel angle, a heading angle, accelerator pedal opening information, brake pedal opening information, a gear, a driving mode, a road mode, and a battery state of charge SOC.

With reference to the third aspect, in a possible implementation, the obtaining unit is specifically configured to obtain the road surface characteristic of the first area via at least one sensor associated with the vehicle.

With reference to the third aspect, in a possible implementation, the control unit is specifically configured to send a control instruction to a target component of the vehicle, where the target component includes at least one of the following: a motor control unit, an electronic stability controller ESC, or a brake system.

According to a fourth aspect, an embodiment of this application provides a vehicle control apparatus, including: an obtaining unit, configured to obtain first scenario information, where the first scenario information indicates a first scenario of a vehicle; a determining unit, configured to determine target torque control information according to at least one torque control strategy associated with the first scenario; and a control unit, configured to control, based on the target torque control information, the vehicle to travel.

With reference to the fourth aspect, in a possible implementation, the determining unit is further configured to determine, in any one of the following manners, the at least one torque control strategy associated with the first scenario: determining, based on stored first information, the at least one torque control strategy associated with the first scenario, where the first information is used to describe an association relationship between different road surface scenarios and different torque control strategies; or determining, based on a first parameter value associated with the first scenario, the at least one torque control strategy associated with the first scenario, where the first parameter value represents a degree of impact of a road surface characteristic of a first area on traveling stability of the vehicle.

With reference to the fourth aspect, in a possible implementation, the first parameter value includes a road adhesion coefficient and/or a slip rate.

With reference to the fourth aspect, in a possible implementation, the at least one torque control strategy associated with the first scenario is used to adjust at least one of the following control parameters: a total torque value, a torque gradient, an inter-axle torque distribution proportion, or a brake electro-hydraulic distribution proportion.

With reference to the fourth aspect, in a possible implementation, each torque control strategy is associated with an adjustment coefficient, and the adjustment coefficient is used to decrease a value of a control parameter to be adjusted according to the torque control strategy.

With reference to the fourth aspect, in a possible implementation, the obtaining unit is specifically configured to: receive the first scenario information from an intelligent driving domain control unit MDC, where the first scenario is obtained through identifying based on the road surface characteristic of the first area, and the first area includes an area into which the vehicle is to travel at a future first moment.

With reference to the fourth aspect, in a possible implementation, the obtaining unit is further configured to obtain a traveling parameter of the vehicle. That the obtaining unit obtains the first scenario information includes: performing scenario identification based on the traveling parameter and the road surface characteristic of the first area, to obtain the first scenario information, where the first area includes an area into which the vehicle is to travel at a future first moment.

With reference to the fourth aspect, in a possible implementation, the traveling parameter may include but is not limited to at least one of the following: a traveling speed, a wheel speed, a yaw rate, longitudinal acceleration, a roll angle, a steering wheel angle, a heading angle, accelerator pedal opening information, brake pedal opening information, a gear, a driving mode, a road mode, and a battery state of charge SOC.

With reference to the fourth aspect, in a possible implementation, the controlling, based on the target torque control information, the vehicle to travel includes: sending a control instruction to a target component of the vehicle, where the target component includes at least one of the following: a motor control unit, an electronic stability controller ESC, or a brake system.

According to a fifth aspect, an embodiment of this application provides an electronic device, including a processor. The processor is coupled to a memory. The processor is configured to execute a computer program or instructions stored in the memory, so that the electronic device performs the method according to any one of the first aspect and the possible implementations of the first aspect, or the electronic device performs the method according to any one of the second aspect and the possible implementations of the second aspect.

According to a sixth aspect, an embodiment of this application provides a vehicle, including a unit configured to implement the method according to any one of the first aspect and the possible implementations of the first aspect, or a unit configured to implement the method according to any one of the second aspect and the possible implementations of the second aspect.

According to a seventh aspect, an embodiment of this application provides a communication apparatus, including at least one processor and an interface circuit. The interface circuit is configured to provide data or code instructions for the at least one processor, the at least one processor is configured to implement, by using a logic circuit or executing the code instructions, the method according to any one of the first aspect and the possible implementations of the first aspect, or the method according to any one of the second aspect and the possible implementations of the second aspect.

According to an eighth aspect, an embodiment of this application provides a computer-readable storage medium. The computer-readable medium stores program code. When the program code is run on a computer, the computer is enabled to perform the method according to any one of the first aspect and the possible implementations of the first aspect, or the computer is enabled to perform the method according to any one of the second aspect and the possible implementations of the second aspect.

According to a ninth aspect, an embodiment of this application provides a computer program product. When the computer program product runs on a computer, the computer is enabled to perform the method according to any one of the first aspect and the possible implementations of the first aspect, or the computer is enabled to perform the method according to any one of the second aspect and the possible implementations of the second aspect.

According to a tenth aspect, an embodiment of this application provides a terminal device, including a unit configured to implement the method according to any one of the first aspect and the possible designs of the first aspect, or a unit configured to implement the method according to any one of the second aspect and the possible designs of the second aspect. For example, the terminal device includes but is not limited to: an intelligent transportation device (for example, an automobile, a ship, an uncrewed aerial vehicle, a train, and a truck), an intelligent manufacturing device (for example, a robot, an industrial device, smart logistics, and a smart factory), and an intelligent terminal (a mobile phone, a computer, a tablet computer, a palmtop computer, a desktop computer, a headset, a speaker, a wearable device, a vehicle-mounted device, and the like).

Based on the implementations provided in the foregoing aspects, embodiments of this application may be further combined to provide more implementations.

For technical effects that can be achieved in any possible implementation of any one of the second aspect to the tenth aspect, refer to descriptions of technical effects that can be achieved in any possible implementation of any one of the first aspect. Repeated parts are not described.

### BRIEF DESCRIPTION OF DRAWINGS

FIG. 1 is a diagram of an application scenario to which an embodiment of this application is applicable;
FIG. 2 is a diagram of a principle of a vehicle control method according to an embodiment of this application;
FIG. 3 is a schematic flowchart of a vehicle control method according to an embodiment of this application;
FIG. 4 to FIG. 6 are diagrams of a first area located on a road according to an embodiment of this application;
FIG. 7 is a diagram of a first area located in a parking space according to an embodiment of this application;
FIG. 8 is a diagram of a road surface characteristic that affects traveling stability of a vehicle according to an embodiment of this application;
FIG. 9 to FIG. 12 are diagrams of adjusted control parameters according to an embodiment of this application;
FIG. 13 is a diagram of identifying a first scenario with reference to a traveling parameter of a vehicle according to an embodiment of this application;
FIG. 14 is a diagram of a structure of a vehicle control apparatus according to an embodiment of this application; and
FIG. 15 is a diagram of another vehicle control apparatus according to an embodiment of this application.

### DESCRIPTION OF EMBODIMENTS

Embodiments of this application provide a vehicle control method and apparatus, to adaptively adjust a control parameter of a vehicle-related component, to ensure smoothness and comfort of vehicle driving. The method and the apparatus are based on a same technical concept. Because problem-resolving principles of the method and the apparatus are similar, mutual reference may be made to implementations of the apparatus and the method, and repeated parts are not described again. In addition, in embodiments of this application, unless otherwise stated or there is a logic conflict, terms and/or descriptions between embodiments are consistent and may be mutually referenced, and technical characteristics in different embodiments may be combined into a new embodiment based on an internal logical relationship thereof.

The vehicle control solution in embodiments of this application may be applied to the internet of vehicles, for example, vehicle to everything (vehicle to everything, V2X), long term evolution-vehicle (long term evolution-vehicle, LTE-V), and vehicle to vehicle (vehicle to vehicle, V2V). For example, the vehicle control method may be applied to a vehicle having a driving movement function, or another apparatus having the driving movement function in the vehicle. The another apparatus includes but is not limited to another sensor, for example, a vehicle-mounted terminal, a vehicle-mounted control unit, a vehicle-mounted module, a vehicle-mounted assembly, a vehicle-mounted component, a vehicle-mounted chip, a vehicle-mounted unit, a vehicle-mounted radar, or a vehicle-mounted camera. The vehicle may implement the vehicle control method provided in embodiments of this application by using the vehicle-mounted terminal, the vehicle-mounted control unit, the vehicle-mounted module, the vehicle-mounted assembly, the vehicle-mounted component, the vehicle-mounted chip, the vehicle-mounted unit, the vehicle-mounted radar, or the vehicle-mounted camera. Certainly, the control solution in embodiments of this application may be further applied to an intelligent terminal having a movement control function other than the vehicle, or configured on the intelligent terminal having the movement control function other than the vehicle, or configured on a component of the intelligent terminal. The intelligent terminal may be an intelligent transportation device, a smart home device, a robot, or the like. For example, the intelligent terminal includes but is not limited to an intelligent terminal or another sensor like a control unit, a chip, a radar or a camera in the intelligent terminal, and another component.

In embodiments of this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit priorities or importance of the plurality of objects. For example, first indication information and second indication information are merely intended to distinguish between different indication information, but do not indicate different priorities, importance, or the like of the two pieces of indication information.

The following describes embodiments of this application with reference to the accompanying drawings.

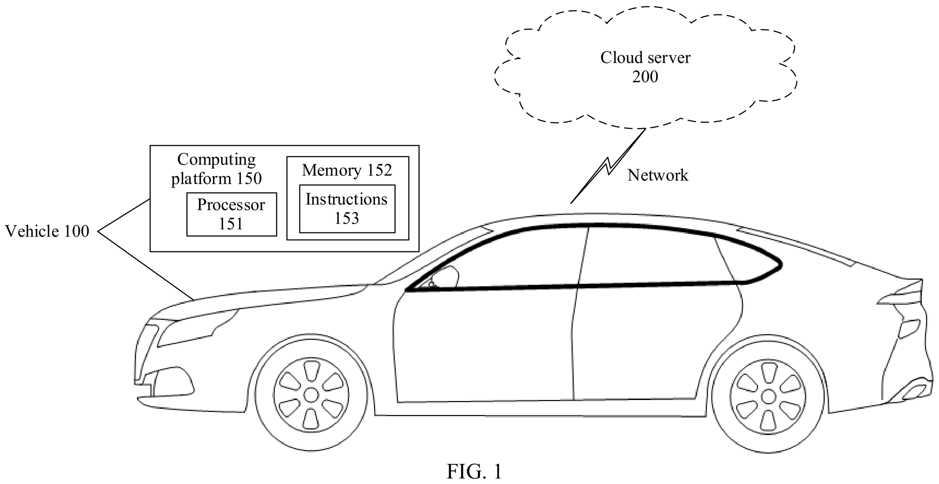

FIG. 1 is a diagram of an application scenario to which an embodiment of this application is applicable. In the application scenario, a vehicle 100 may be included. In a possible implementation, a cloud server 200 may be further included in the application scenario. The vehicle 100 and the cloud server 200 may communicate with each other by using a network. In an embodiment, the cloud server 200 may alternatively be implemented by using a virtual machine.

Some or all functions of the vehicle 100 are controlled by a computing platform 150 (or referred to as a computer system). The computing platform 150 may include at least one processor 151. The processor 151 may execute instructions 153 stored in a non-transitory computer-readable medium such as a memory 152. In some embodiments, the computing platform 150 may alternatively be a plurality of computing devices that control individual components or subsystems of the vehicle 100 in a distributed manner. The processor 151 may be any conventional processor, for example, a central processing unit (central processing unit, CPU). Alternatively, the processor 151 may further include, for example, a graphics processing unit (graphics processing unit, GPU), a field programmable gate array (field programmable gate array, FPGA), a system on chip (system on chip, SoC), an application-specific integrated circuit (application-specific integrated circuit, ASIC), or a combination thereof.

Optionally, the vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application. In a possible implementation, the vehicle 100 may be an electric vehicle (Electric Vehicle, EV), for example, a two-wheel drive electric vehicle or a four-wheel drive electric vehicle. This is not limited in embodiments of this application.

A structure of the vehicle in FIG. 1 should not be understood as a limitation on this embodiment of this application.

The vehicle control method in embodiments of this application may be implemented by a vehicle control apparatus. The vehicle control apparatus may be an independent apparatus, or may be a chip or a component in the vehicle 100 shown in FIG. 1, or may be a software module, and may be deployed on a related vehicle-mounted device of the vehicle 100. A product form and a deployment manner of the vehicle control apparatus are not limited in embodiments of this application. In the following, for ease of understanding and description, the vehicle control apparatus is used as an intelligent driving domain control unit (for example, a mobile data center (mobile data center, MDC)) or a vehicle control unit (vehicle control unit, VCU) integrated into the computing platform 150 in the vehicle 100. Alternatively, a vehicle domain controller (vehicle domain controller, VDC) is used as an example to describe a vehicle control solution in embodiments of this application.

The following describes the vehicle control solution in embodiments of this application.

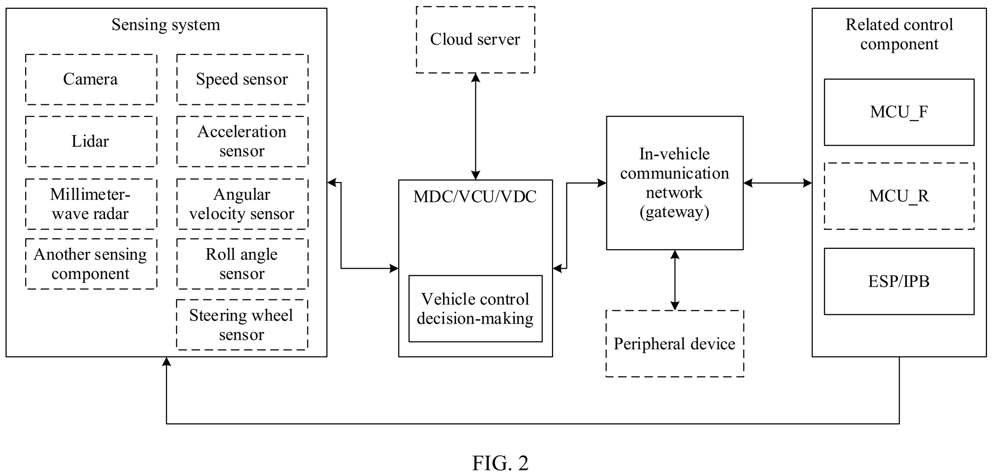

FIG. 2 is a diagram of a principle of a vehicle control method according to an embodiment of this application. As shown in FIG. 2, for example, a vehicle control apparatus (equivalent to vehicle control decision-making in FIG. 2) is integrated into an MDC of a vehicle. The MDC may interact with a cloud server or another module in the vehicle, to implement the vehicle control solution in embodiments of this application. Alternatively, for example, the vehicle control apparatus is integrated into a VDC or a VCU of the vehicle. The VDC or the VCU may interact with a cloud server or another module in the vehicle, to implement the vehicle control solution in embodiments of this application.

In an example, the MDC may obtain sensing data of an environment in which the vehicle is located through a sensing system of the vehicle, and keep monitoring and data collection of an ambient environment of the vehicle. The sensing system may include but is not limited to a camera (camera), a lidar (light detection and ranging, LIDAR), a millimeter-wave radar (millimeter-wave radar, RADAR), or another sensing component. The sensing data obtained by the MDC through the sensing system may include: an image or a video of an ambient environment in which the vehicle is currently located, a target object identified based on the image or the video, a distance (or a spacing) between the vehicle and the identified target object, and the like. The MDC may match the sensing data with at least one piece of stored scenario information, to identify a scenario in which the vehicle is located. The identified scenario indicates that a road surface characteristic that affects traveling stability of the vehicle exists at a current location of the vehicle or a location (including a lane area, a parking space, a non-paved road surface, or the like) that is in front of the vehicle and into which the vehicle is to travel. In this case, the MDC may indicate the VDC (or the VCU, which is not distinguished and described one by one in the following description) to dynamically perform vehicle control decision-making based on the scenario, to dynamically adjust a control parameter of a vehicle-related component (for example, output torque of a motor), and assist in controlling safe traveling of the vehicle. In this way, traveling stability of the vehicle and driving experience are ensured.

During specific implementation, one scenario may be usually associated with one or more torque control strategies. If the MDC may be directly connected to the vehicle-related component and may deliver a control instruction by using a vehicle communication network (for example, a gateway), the MDC may deliver a control instruction to the vehicle-related component based on the one or more torque control strategies associated with the identified scenario, so that the vehicle-related component assists, based on the received control instruction, in controlling safe traveling of the vehicle. Alternatively, if the MDC needs to be connected to the vehicle-related component through the VDC (or the VCU), the MDC may indicate the scenario to the VDC (or the VCU). The VDC (or the VCU) may distribute torque to the vehicle-related component or may adjust another control parameter based on the one or more torque control strategies associated with the scenario. The VDC (or the VCU) may deliver a control instruction to the vehicle-related component by using an in-vehicle communication network (or a gateway), so that the vehicle-related component assists, based on the control instruction from the VDC, in controlling safe traveling of the vehicle. In this way, traveling stability of the vehicle and driving experience are ensured. For example, the vehicle-related component may include, for example, a motor control unit (motor control unit, MCU), and the MCU may include, for example, a front axle motor control unit (represented as MCU_F) or a rear axle motor control unit (represented as MCU_R). Alternatively, for example, the vehicle-related component may include an electronic stability controller (electronic stability controller, ESC). Alternatively, for example, the vehicle-related component may include a brake system of the vehicle, specifically, for example, an intelligent integrated power brake system (integrated power brake, IPB). The IPB may integrate, for example, an anti-lock brake system (anti-lock brake system, ABS), an ESP, an acceleration slip regulation system (acceleration slip regulation, ASR) (also referred to as a traction control system), and the like.

In this embodiment of this application, the scenario information is information used to describe at least one scenario. The at least one piece of scenario information may be pre-stored in a storage medium accessible by the MDC, the VDC, or the VCU. The storage medium may be a local storage device of the vehicle, or may be a cloud server. This is not limited in embodiments of this application. In an optional implementation, an operator may design, based on crowd-sourcing data, at least one piece of associated scenario information for different road sections in advance, and the vehicle control apparatus may obtain, based on a traveling direction of the vehicle and a road section into which the vehicle may travel, the at least one piece of scenario information associated with the road section from the cloud server in advance. How the at least one piece of scenario information is obtained is not limited in embodiments of this application. The scenario information and a torque control strategy associated with the scenario information are described in detail with reference to a method procedure in a subsequent embodiment. Details are not described herein.

In an optional implementation, the sensing system may further include but is not limited to: a speed sensor, an acceleration sensor, an angular velocity sensor, a roll angle sensor, a steering wheel sensor, and another sensor. The sensing data obtained through the sensing system of the vehicle may further include a traveling parameter of the vehicle, for example, a traveling speed, a wheel speed, a longitudinal (lateral) acceleration, a yaw rate, a roll angle, a steering wheel angle, a heading angle, accelerator pedal opening information, brake pedal opening information, a gear, a driving mode, a road mode, a battery state of charge (state of charge, SOC), and the like. The MDC/VDC/VCU may further obtain various traveling parameters of the vehicle to which the MDC/VDC/VCU belongs, and determine, with reference to the obtained various traveling parameters, more accurate scenario information or a torque control strategy that better adapts to a current situation, so that the MDC or the VDC (or the VCU) distributes torque to the vehicle-related component or adjusts a control parameter of another component based on the determined torque control strategy.

In another optional implementation, after determining the target torque control strategy, the MDC or the VDC (or the VCU) may further output, by using the gateway, reminder information to a peripheral device associated with the vehicle, for example, a touchscreen or a speaker, to indicate a vehicle control decision-making result to a driver. In this way, the driver learns of a dynamic change of a related control parameter of the vehicle. The MDC, the VDC, or the VCU may further receive control information from the vehicle driver via the peripheral device, for example, the touchscreen or the microphone (or by using the gateway). The control information may be associated with the foregoing reminder information, and may be used to assist the MDC, the VDC, or the VCU in vehicle control decision-making.

In FIG. 2, bidirectional arrows between different modules merely indicate that corresponding modules can communicate with each other, and do not limit any communication manner or information format. The MDC or the VDC (or the VCU) may communicate with different modules in different communication manners or information formats. The MDC or the VDC (or the VCU) may further have a protocol conversion function or a format conversion function. This is not limited in embodiments of this application. Other modules in the vehicle shown in FIG. 2 are merely examples. A dashed box only indicates that a corresponding module is an optional module. The vehicle may not include some modules shown in FIG. 2, or may include modules other than some modules shown in FIG. 2, or some modules in FIG. 2 are replaced with other modules not shown. Details are not described herein again. In some designs, the sensing system of the vehicle may be integrated into any one of the MDC, the VCU, or the VDC, or the VCU or the VDC may be integrated into the MDC. Product forms or integration manners of different modules of the vehicle are not limited in embodiments of this application.

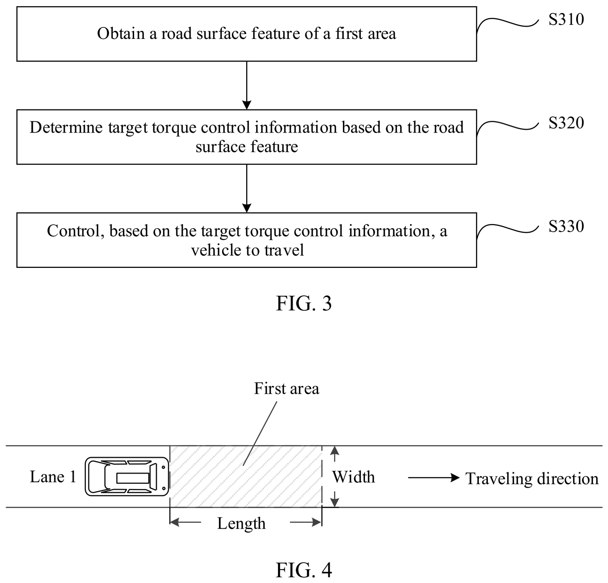

With reference to the system architectures shown in FIG. 1 and FIG. 2, a vehicle control method provided in an embodiment of this application may be implemented. As shown in FIG. 3, the vehicle control method may include the following steps.

S310: A vehicle control apparatus (for example, an MDC, a VDC, or a VCU) obtains a road surface characteristic of a first area.

In this embodiment of this application, the vehicle control apparatus may be deployed on a vehicle, and the first area may include at least an area into which the vehicle is to travel at a future first moment. If the vehicle is to travel into a paved road surface at the first moment, the first area may include a lane area or a parking space into the vehicle is to travel. If the vehicle is to travel into a non-paved road surface at the first moment, for example, an idle area in which no lane or parking space is planned, or an off-road road surface, the first area may include any area in which the vehicle is allowed to pass. A specific range of the first area is not limited in embodiments of this application.

In this embodiment of this application, the entire vehicle may be used as a control unit, and the future "first moment" is relative to the entire vehicle. Specifically, when the vehicle travels in a forward direction, the first moment may be an arrival moment at which a front wheel of the vehicle arrives at the first area in the future, or when the vehicle travels in a backward direction, the first moment may be an arrival moment at which a rear wheel of the vehicle arrives at the first area in the future. In some other embodiments, the front wheel and the rear wheel of the vehicle may alternatively be logically considered as two independent components. The first moment may be, for example, a moment at which the front wheel of the vehicle has traveled into the first area and the rear wheel of the vehicle does not arrive at the first area when the vehicle travels in the forward direction. Alternatively, the first moment may be a moment at which the rear wheel of the vehicle has traveled into the first area and the front wheel of the vehicle does not arrive at the first area when the vehicle travels in the backward direction. This is not limited in embodiments of this application.

In an example, the first area includes at least the lane area into which the vehicle is to travel at the future first moment. An implementation of the first area may be as follows.

As shown in FIG. 4, a vehicle traveling on a one-way lane 1 is used as an example. The first area may include an area of the lane 1 within a predetermined range in front of a vehicle head when the vehicle moves in a traveling direction, as shown by a rectangular filling box in FIG. 4. A width of the first area may be the same as a width of the lane 1 (a preset width error is allowed). A length of the first area may be preset, and may be a value (for example, 10 meters), or may be a length range (for example, 5 meters to 15 meters). A range of the first area is not limited in embodiments of this application.

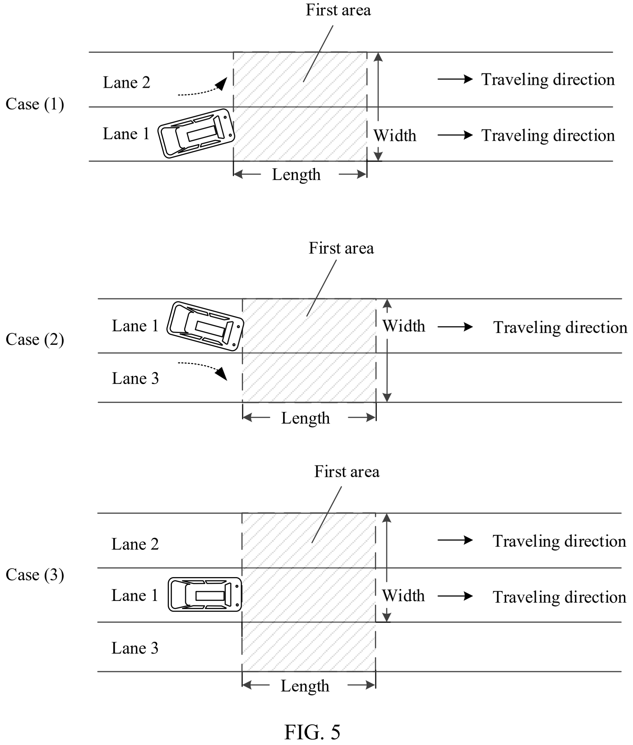

Alternatively, as shown in FIG. 5, if the lane 1 is not a one-way lane, and a lane 2 and/or a lane 3 that are/is adjacent to and in a same direction as the lane 1 exist/exists on a road on which the lane 1 is located, based on a driving intent of a driver or a driving intent of autonomous driving, the vehicle may have a lane change behavior when moving in a traveling direction, for example, changing from the lane 1 to the lane 2 (that is, changing to a lane on the left) or changing from the lane 1 to the lane 3 (that is, changing to a lane on the right). In this case, the first area may include an area of the lane 1 and an area of the lane 2 and/or an area of the lane 3 that are within a predetermined range in front of a vehicle head when the vehicle moves in the traveling direction.

As shown in a rectangular filling box in FIG. 5, in Case (1), if the vehicle changes from the lane 1 to the lane 2, the first area may include an area of the lane 1 and an area of the lane 2 that are within a predetermined distance in front of the vehicle head when the vehicle moves in the traveling direction. A width of the first area may be the same as a sum of widths of the lane 1 and the lane 2 (a preset width error is allowed). A length of the first area may be preset, and may be a value (for example, 10 meters), or may be a length range (for example, 5 meters to 15 meters). In Case (2), if the vehicle changes to the lane 3, the first area may include an area of the lane 1 and an area of the lane 3 that are within a predetermined distance in front of the vehicle head when the vehicle moves in the traveling direction. A width of the first area may be the same as a sum of widths of the lane 1 and the lane 3 (a preset width error is allowed). A length of the first area may be preset, and may be a value (for example, 10 meters), or may be a length range (for example, 5 meters to 15 meters). In Case (3), regardless of whether the vehicle changes a lane, the first area may alternatively include an area of the lane 1, an area of the lane 2, and an area of the lane 3 that are within a predetermined distance in front of the vehicle head when the vehicle moves in the traveling direction. A width of the first area may be the same as a sum of widths of the lane 1, the lane 2, and the lane 3 (a preset width error is allowed). A length of the first area may be preset, and may be a value (for example, 10 meters), or may be a length range (for example, 5 meters to 15 meters).

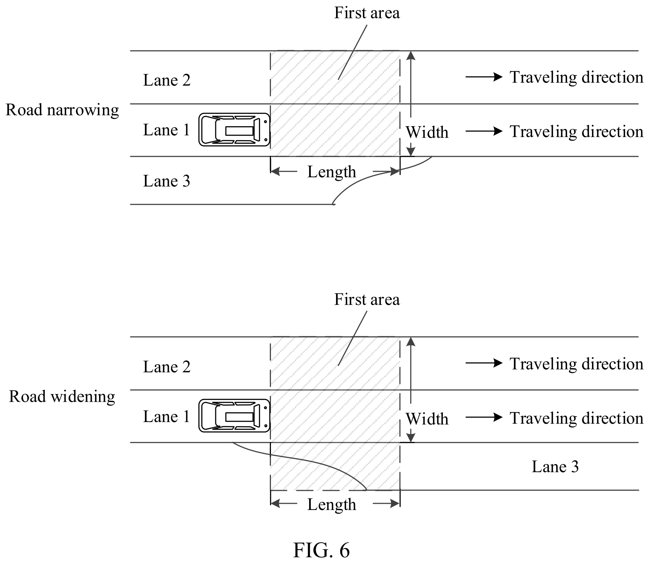

The description of the length or the width of the first area in the three cases in FIG. 5 is merely an example rather than a limitation. During actual application, the length or the width of the first area may also be adjusted based on an actual requirement or a change of a road scenario. Details are not described herein again. In some designs, the lane change behavior of the vehicle may alternatively be passive. For example, as shown in FIG. 6, when road narrowing or lane decrease (for example, a change from three lanes to two lanes) or when road widening or lane increase (for example, a change from two lanes to three lanes), or like is caused by a change of a topology structure of a road on which the vehicle is located, the width of the first area may be automatically narrowed or widened as a road width changes. Details are not described herein again.

In another example, the first area includes at least the parking space into which the vehicle is to travel at the future first moment. An implementation of the first area may be as follows.

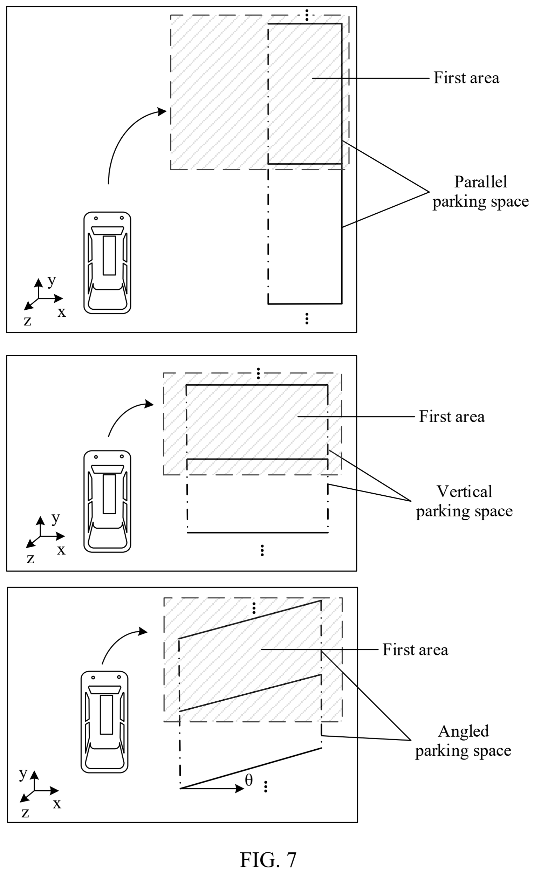

As shown in FIG. 7, if the vehicle needs to park in a parallel parking space on a roadside, or needs to travel into a vertical parking space or an angled parking space (for example, at an inclined angle of θ) of a parking lot, the first area includes at least a target parking space to which the vehicle is to travel, for example, the first area may further include an area through which the vehicle may travel from a current location to the target parking space. On the contrary, if the vehicle moves out of a parking space, the first area may include an area of a lane within the predetermined range in front of the vehicle head when the vehicle moves in the traveling direction, as shown in FIG. 4.

The first area described with reference to the rectangular box in FIG. 4 to FIG. 7 is merely an example of a form of the first area rather than a limitation. In another embodiment, the first area may alternatively be implemented as a sector centered on the vehicle head, or an irregular shape. This is not limited in embodiments of this application. During actual application, the road on which the vehicle is located may alternatively be a non-paved road surface, that is, a road/lane on which the vehicle is allowed to pass may have no planned lane line, or a parking space into which the vehicle is allowed to park has no planned parking space line, the first area may be an area corresponding to a rectangular box (or another shape) that is set based on experience, and a size of the rectangular box may also be set based on experience. This is not limited in embodiments of this application.

During specific implementation of S310, the vehicle control apparatus may obtain the road surface characteristic of the first area via at least one sensor associated with the vehicle.

For example, the vehicle control apparatus may capture an environmental image or a video in front of or around the vehicle through a camera, and perform characteristic analysis, target identification, and processing on the image or the video, to extract the road surface characteristic of the first area from the image or the video. The road surface characteristic may include, for example, a characteristic of a road surface material. The road surface material may be, for example, a dusty road surface, an asphalt road surface, a cement concrete road surface, a waterlogged road surface, an icy and snowy road surface, or a wet epoxy road surface. Different road surface materials may correspond to different road adhesion coefficients. Alternatively, the road surface characteristic may include an identified target object (for example, a road surface object like an obstacle that affects passing of the vehicle or a manhole cover that affects traveling stability of the vehicle) located on a road surface of the first area, and a location, a shape, a size, or other attribute information of the target object. In a possible implementation, the vehicle control apparatus may detect distance information between the vehicle and the target object through a lidar, a millimeter-wave radar, or the like. The distance information may also be used as an example of the road surface characteristic of the first area.

S320: The vehicle control apparatus determines target torque control information based on the road surface characteristic.

For example, during specific implementation of S320, the vehicle control apparatus may identify, based on the obtained road surface characteristic of the first area, a first scenario in which the vehicle is located, and determine the target torque control information according to at least one torque control strategy associated with the first scenario.

The vehicle control apparatus may obtain at least one piece of scenario information from a storage medium (for example, a local storage medium of the vehicle or a cloud server) that is allowed to be accessed, and each piece of scenario information may be used to describe a road surface scenario. The vehicle control apparatus may match the road surface characteristic of the first area with the at least one piece of scenario information, to identify whether the vehicle is located in the first scenario. An area corresponding to the first scenario may include a first road surface characteristic, and the first road surface characteristic affects the traveling stability of the vehicle. For example, a second parameter value may represent a degree of impact of the first road surface characteristic on the traveling stability of the vehicle, and the second parameter value associated with the first road surface characteristic is greater than or equal to a first threshold.

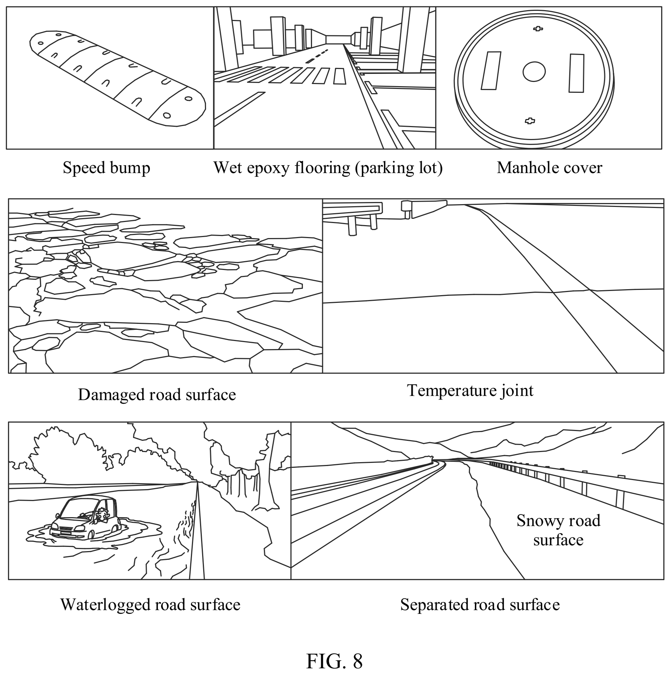

For example, as shown in FIG. 8, the road surface characteristic that affects the traveling stability of the vehicle may include but is not limited to the following content.
(1) A speed bump, also known as a speed hump, is a traffic facility installed on a road to slow down a passing vehicle. A shape of the speed bump is usually a strip shape, or may be a dot shape. A material of the speed bump may be rubber or metal. The speed bump is usually painted in alternating yellow and black stripes to attract visual attention, so that a road surface is slightly elevated to ensure that vehicle slows down. Speed bumps are usually disposed at road sections in which vehicles need to slow down and road sections in which traffic accidents are prone to occur, for example, road intersections and entrances to industrial and mining enterprises, schools, and residential areas, and are a new type of dedicated traffic safety setting used to reduce traveling speeds of motor vehicles and non-motor vehicles.
(2) A manhole cover is used to cover a road or a deep well to prevent people or objects from falling in. Manhole covers can be classified into metal manhole covers, high-strength fiber cement concrete manhole covers, resin manhole covers, and the like by material. Generally, the manhole cover is circular. Manhole covers may be deployed in greenbelts, sidewalks, motor vehicle lanes, docks, alleys, and the like.
(3) A temperature joint generally refers to a building expansion joint (an expansion joint for short), and is a construction joint disposed on an appropriate position along a construction joint in a building or structure to prevent a building component (for example, a road) from cracks or damage caused by a climate temperature change (for example, thermal expansion or contraction). The expansion joint divides the building component, for example, a wall, a floor, and a roof (excluding a wooden roof), into two independent parts, so that the building or structure can be horizontally expanded and contracted in a length direction.
(4) Road surface damage includes structural damage and functional damage. The structural damage leads to degradation in a bearing capacity of a road surface structure, and is manifested in the form of various structural cracks. The functional damage affects traveling quality and traveling safety, and is manifested as degradation of a road surface service capability, and deterioration of flatness, and anti-skid performance. Generally, when the structural damage is increased to a specific extent, functional damage also occurs.
(5) On a separated road surface, road surfaces on different sides of a same lane exhibit different characteristics because of environment factors, weather conditions (for example, rain, snow or ice), and the like. For example, the left side of the same lane is frozen, and the right side of the same lane is not frozen.
(6) A waterlogged road surface is a road surface where water is accumulated after rain or watering due to surface unevenness of the road surface, and the like.
(7) A coated epoxy flooring (for example, a wet epoxy coating) is made of solvent-type or solvent-free epoxy resin and a conductive material. The coated epoxy flooring has the advantages such as anti-static properties, dust resistance, moisture resistance, high gloss, aesthetic appeal, wear resistance, impact resistance, and ease of cleaning. The coated epoxy flooring is applicable to non-heavy-load industrial factories such as electronics factories, electrical factories, mechanical factories, chemical factories, pharmaceutical factories, textile factories, clothing factories, food factories, beverage factories, cosmetics factories, packaging facilities, plastics factories, and tobacco factories, and is also applicable to cement or terrazzo surfaces in other specialized sites such as warehouses, supermarkets, corridors, and parking lots.

For the foregoing different road surface characteristics, a plurality of scenarios (for example, referred to as scenario modeling) may be designed in advance. In each scenario, classification into different levels can be performed based on the intensity of the road surface characteristic, so that the vehicle control apparatus matches a corresponding scenario based on an actually obtained road surface characteristic.

For example, the plurality of scenarios may be shown in the following Table 1.

**Table 1**

| Scenario code | Road surface characteristic | Classification criterion | Level 1 | Level 2 | Level 3 |
|---|---|---|---|---|---|
| A | Speed bump | Elevation | 0 centimeters to X1 centimeters (cm) | X1 cm to X2 cm | X2 cm to X3 cm |
| B | Manhole cover | Size | Small | Medium | Large |
| C | Temperature joint | Size | Narrow | Medium | Wide |
| D | Damaged road surface | Severity level | Minor | Medium | Severe |
| E | Separated road surface | Adhesion difference | Adhesion difference: 0.3 | Adhesion difference: 0.5 | Adhesion difference: 0.8 |
| F | Waterlogged | Contact area | Single-side wheel, short duration | Single-side wheel, long duration | Double-side wheels, long duration |
| Scenario code | Road surface characteristic | Classification criterion | Level 1 | Level 2 | Level 3 |
| G | Wet epoxy | Wet/slip rate | 30% | 50% | 75% |

The "scenario code" may also be referred to as a scenario identifier, and corresponds to a road surface scenario. The "road surface characteristic" is a road surface characteristic associated with a road surface scenario. The "classification criterion" is a division criterion of degrees of different road surface characteristics that affect vehicle stability. "Level 1", "Level 2", and "Level 3" are different impact levels classified based on the classification criterion in different road surface scenarios. Different impact levels may be associated with one or more torque control strategies, and different torque control strategies have different requirements on a control parameter of a vehicle-related component.

For example, the speed bump scenario is used as an example. X1, X2, and X3 represent elevation values, and X1<X2<X3. In the speed bump scenario of the level 1 elevation, the speed bump is low, damage caused to components such as a suspension system and a tire of the vehicle is small, the vehicle can pass through smoothly, and a requirement on the control parameter of the vehicle-related component is low. However, in the speed bump scenario of the level 2 elevation or the level 3 elevation, the speed bump is high, and damage to a suspension system, a tire, and the like of the vehicle is large. When the vehicle passes through the speed bump, an obvious vibration or jolt occurs, the vehicle passes through unstably, and a requirement on the control parameter of the vehicle-related component is high. Impact of the manhole cover scenario, the temperature joint scenario, and the damaged road surface scenario on vehicle stability is similar to impact of the speed bump on vehicle stability. Details are not described herein again.

Alternatively, the separated road surface scenario is used as an example. Road adhesion coefficients of a separated road surface are uneven. A greater difference between the road adhesion coefficients indicates a higher risk of slipping of the vehicle and a higher risk of vehicle instability. An identified separated road surface is matched with a corresponding level, so that a corresponding control parameter can be adjusted based on a control strategy corresponding to the level, to reduce a risk of vehicle slipping as much as possible.

Alternatively, the waterlogged road surface scenario is used as an example. A road adhesion coefficient of a waterlogged road surface is very low. A greater area of the waterlogged road surface indicates a higher risk of slipping of the vehicle and a higher risk of vehicle instability. A risk of instability and slipping when double-sided wheels are in contact with the waterlogged road surface is higher than that when a single-sided wheel is contact with the waterlogged road surface. Impact of the wet epoxy flooring road surface scenario on vehicle stability is similar to impact of the waterlogged road surface on vehicle stability. Details are not described herein again.

Table 1 is merely an example description rather than any limitation of the scenario in this embodiment of this application. During actual application, more road surface characteristics that affect vehicle stability may be obtained, and scenario modeling is performed based on a requirement or an actual situation of a road. A classification criterion and a level type in different road surface scenarios are not limited. During specific implementation, a road surface condition is more complex based on different scenarios, and different road surface scenarios may have different characteristics in sensing data. When a corresponding characteristic is identified in the sensing data, it is considered that there is a corresponding scenario ahead. The characteristics may include but are not limited to: a spectral frequency band, a light intensity, a geometric form of a lidar point cloud, an ultrasonic frequency, a characteristic frequency band, and the like. Similarly, the foregoing characteristics may alternatively be classified based on different thresholds, and are referred to as characteristic intensity, or referred to as intensity of road surface characteristics. Similar to Table 1, classification may be performed in advance based on the intensity of road surface characteristics, so that corresponding control parameters are adjusted at different levels based on corresponding control strategies, to ensure smoothness and stability during vehicle traveling. For detailed implementation details, refer to the foregoing related descriptions with reference to Table 1. Details are not described herein again.

The vehicle control apparatus may design, based on the vehicle-related component, control strategies for different control parameters, and determine an association relationship (or referred to as a mapping relationship) between the scenarios shown in Table 1 and the different control strategies. In this way, when identifying the first scenario, the vehicle control apparatus may determine one or more torque control strategies associated with the first scenario.

For example, the control strategy for different control parameters may include at least one of the following:
a, a total torque value limitation strategy;
b, a torque gradient limitation strategy;
c, a four-wheel drive inter-axle torque distribution strategy; and
d, a hydraulic braking proportion adjustment strategy.

An adjustment object (namely, the control parameter) of the total torque value limitation strategy is a torque extreme value, an adjustment object of the torque gradient limitation strategy is a torque gradient, an adjustment object of the four-drive inter-axle torque distribution strategy is an inter-axle torque distribution proportion, and an adjustment object of the hydraulic braking proportion adjustment strategy is a brake electro-hydraulic distribution proportion. Used calculation formulas may satisfy the following expressions (1) to (4):
control strategy a: adjusted torque extreme value=K*(1-LEVEL *5%)*original torque extreme value (1);
control strategy b: adjusted torque gradient=K*(1-LEVEL*5%)*original torque gradient (2);
control strategy c: adjusted torque distribution proportion=K*(1-LEVEL*5%)*original torque distribution proportion (3); and
control strategy d: adjusted electro-hydraulic distribution proportion=K*(1-LEVEL*5%)*original electro-hydraulic distribution proportion (4).

Based on the foregoing control strategy, the at least one torque control strategy associated with the first scenario may be used to adjust at least one of the following control parameters: a total torque value (or referred to as a torque extreme value), a torque gradient, an inter-axle torque distribution proportion, or a brake electro-hydraulic distribution proportion.

The torque extreme value may be used as an example of the target torque control information. An output component of the torque extreme value may be a VDC or a VCU, and a corresponding controlled component may be a motor control unit and a motor of the motor control unit. The torque gradient may be used as an example of the target torque control information. An output component of the torque gradient may be a VDC or a VCU, and a corresponding controlled component may be a motor control unit and a motor of the motor control unit. The inter-axle torque distribution proportion may be used as an example of the target torque control information. An output component of the inter-axle torque distribution proportion may be a VDC or a VCU, and a corresponding controlled component may be a front axle motor control unit and a motor of the front axle motor control unit, or may be a rear axle motor control unit and a motor of the rear axle motor control unit. The brake electro-hydraulic distribution proportion may be used as an example of the target torque control information. An output component of the brake electro-hydraulic distribution proportion may be a VDC or a VCU, and a corresponding controlled component may be a front axle motor control unit and a motor of the front axle motor control unit, or may be a rear axle motor control unit and a motor of the rear axle motor control unit. "K*(1 - LEVEL*5%)" may be used as an adjustment coefficient as a whole, and "K", "LEVEL", or "5%" may be designed based on a requirement. This is not limited in embodiments of this application.

Based on the different road surface scenarios and the different torque control strategies designed above, during specific implementation, the vehicle control apparatus may determine, in any one of the following manners, the at least one torque control strategy associated with the first scenario.

Manner (1): Determine, based on first information, the at least one torque control strategy associated with the first scenario, where the first information is used to describe an association relationship between different road surface scenarios and different torque control strategies.

Manner (2): Determine, based on a first parameter value associated with the first scenario, the at least one torque control strategy associated with the first scenario, where the first parameter value represents a degree of impact of a road surface characteristic of a first area on traveling stability of the vehicle.

Manner (1) is a pre-configuration manner, and the stored first information may be a preferred strategy or strategy combination selected for a scenario after a plurality of groups of strategy combination tests are designed in advance for the different road surface scenarios and the different scenario characteristic levels. In this manner, an association relationship between the scenario and the torque control strategy is fixed, and the vehicle control apparatus may directly use the association relationship to determine the at least one torque control strategy associated with the first scenario.

For example, the first information may be shown in the following Table 2 or Table 3.

**Table 2**

| Scenario code | Road surface characteristic | Scenario K value (K) | Control strategy (a to d) |
|---|---|---|---|
| A | Speed bump | 0.8 | d+c |
| B | Manhole cover | 0.95 | d+c |
| C | Temperature joint | 0.95 | d+c |
| D | Damaged road surface | 0.85 | d+c |
| E | Separated road surface | 0.8 | c |
| F | Waterlogged | 0.8 | a+b+d |
| G | Wet epoxy | 0.6 | d |

**Table 3**

| Scenario code | Road surface characteristic | Scenario K value (K) | Level (LEVEL) | Control strategy (a to d) |
|---|---|---|---|---|
| A | Speed bump | 0.8 | 1 to 3 | d+c |
| B | Manhole cover | 0.95 | 1 to 3 | d+c |
| C | Temperature joint | 0.95 | 1 to 3 | d+c |
| D | Damaged road surface | 0.85 | 1 to 3 | d+c |
| E | Separated road surface | 0.8 | 1 to 3 | c |
| F | Waterlogged | 0.8 | 1 to 3 | a+b+d |
| G | Wet epoxy | 0.6 | 1 to 3 | d |

The scenario K value represents an adjustment coefficient associated with a scenario. The level (LEVEL) (1 to 3) in Table 3 represents level 1, level 2, or level 3 obtained through division in the different road surface scenarios in Table 1. For example, "1" represents level 1, "2" represents level 2, and "3" represents level 3. The control strategies (a to d) represent the control strategies for the different control parameters described above, and control strategies corresponding to rows in which the scenario codes A to G are located are a combination of at least one of the control strategies (a to d). For example, the control strategy in the row in which the scenario code A is located is a combination of the hydraulic braking proportion adjustment strategy (d) and the four-wheel drive inter-axle torque distribution strategy (c). Other combinations are similar, and details are not described herein again.

When Table 2 or Table 3 is specifically applied, for example, the MDC performs scenario identification and performs vehicle control through the VDC. After identifying the first scenario (or referred to as a key scenario), the MDC may determine a flag bit associated with the first scenario. The flag bit may include, for example, a scenario code, or may include a scenario code and a level. The MDC may send the flag bit associated with the first scenario to the VDC as first scenario information, to indicate, to the VDC, the first scenario in which the vehicle is located. The VDC may determine, based on the flag bit and Table 2 or Table 3, the at least one torque control strategy (or referred to as a target torque control strategy) associated with the first scenario. Further, the VDC may determine the target torque control information according to the at least one torque control strategy associated with the first scenario.

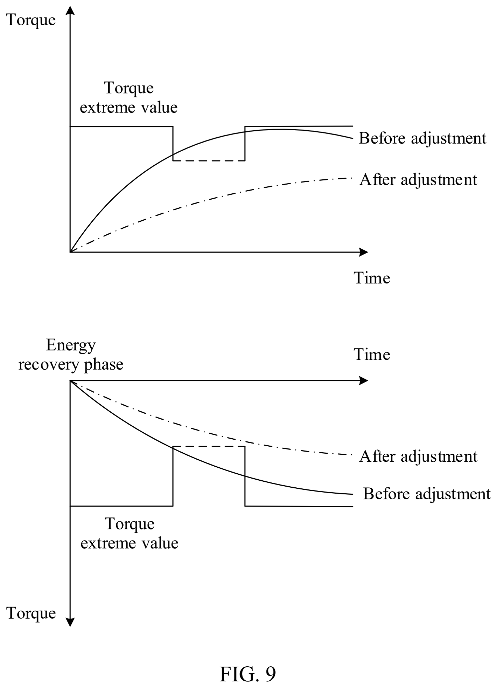

For example, the first scenario is the level 1 speed bump scenario. The target torque control strategy may be used to reduce (or referred to as suppress) the torque gradient and limit the torque extreme value in a normal driving phase or an energy recovery phase. After receiving a flag bit indicating the level 1 speed bump scenario, the VDC correspondingly adjusts the torque gradient and the torque extreme value. A change may be shown in FIG. 9. Different dashed line segments indicate adjusted parameter values. Based on the adjusted torque gradient and the adjusted torque extreme value, the driver (or a vehicle-mounted terminal of an autonomous driving vehicle, or the like) may autonomously adjust and control torque within a limit value. Therefore, the torque extreme value is limited, so that vehicle instability caused by excessively large torque can be avoided. The torque gradient is limited, so that vehicle instability caused by an excessively large torque gradient can be avoided.

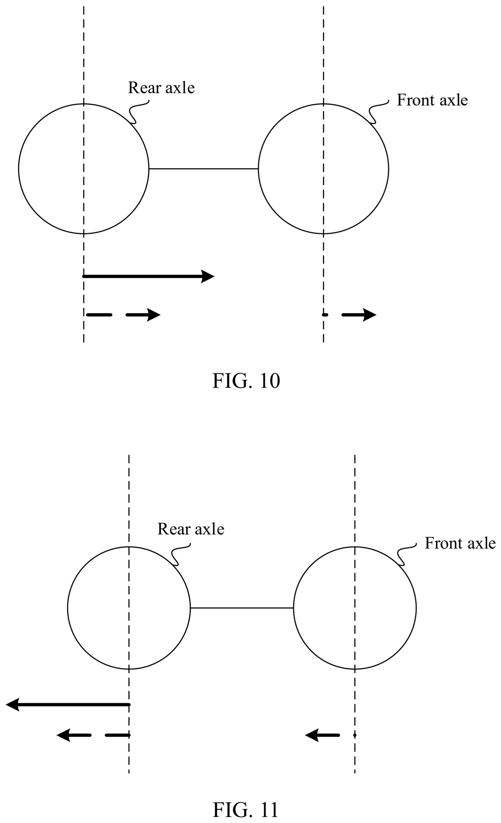

For example, the first scenario is the level 1 separated road surface scenario. The target torque control strategy may be used to adjust the inter-axle torque distribution proportion. After receiving a flag bit indicating the level 1 separated road surface, the VDC adjusts the inter-axle torque distribution proportion. For example, during driving, driving torque is distributed based on an axle load, and torque (shown by a solid arrow in FIG. 10) originally superimposed on the rear axle motor control unit is redistributed and is dynamically distributed to the front axle motor control unit and the rear axle motor control unit (shown by dashed arrows in FIG. 10). In this way, better driving stability can be ensured. Alternatively, for example, during coasting energy recovery, regenerative braking torque is redistributed, and torque (shown by a solid arrow in FIG. 11) originally superimposed on the rear axle motor control unit is redistributed and is dynamically distributed to the front axle motor control unit and the rear axle motor control unit (shown by dashed arrows in FIG. 11), to implement ideal regenerative braking torque distribution as much as possible.

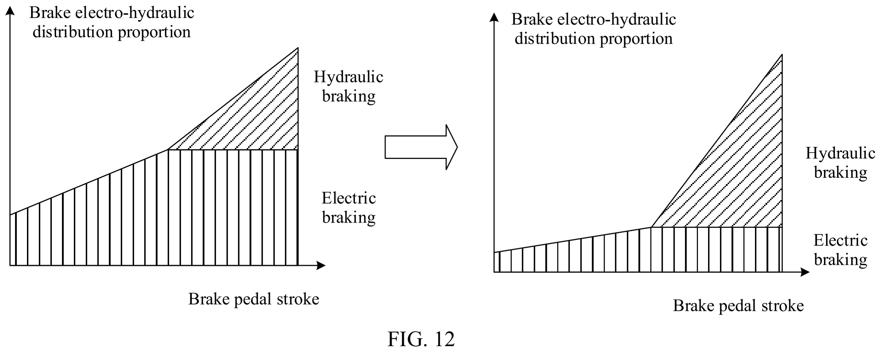

For example, the first scenario is the level 1 wet epoxy flooring scenario. The target torque control strategy may be used to adjust the brake electro-hydraulic distribution proportion. After receiving a flag bit indicating the level 1 wet epoxy flooring scenario, the VDC adjusts the brake electro-hydraulic distribution proportion. For example, as shown in FIG. 12, before adjustment, a proportion of electric braking may be high. After adjustment, a proportion of electric braking may be limited, so that a proportion of hydraulic braking is high. In another embodiment, electric braking torque of an electro-hydraulic coordination system of a cooperative regenerative brake system (Cooperative Regenerative Brake System, CRBS) may alternatively be completely prohibited and only a coasting energy recovery part is retained, and total braking torque is not changed. Details are not described herein. Based on the adjusted electro-hydraulic distribution proportion, the driver (or the vehicle-mounted terminal of the autonomous driving vehicle, or the like) steps down a brake pedal, to autonomously adjust and control the total braking torque, so as to ensure smoothness and stability during vehicle traveling.

Manner (2) is an intelligent adaptation manner. In this manner, the vehicle control apparatus may be an apparatus having an intelligent analysis function. For example, the vehicle control apparatus may obtain, through analysis by using various obtained information, the first parameter value associated with the first scenario, and the first parameter value may be, for example, a road adhesion coefficient and/or a slip rate. A greater first parameter value indicates more severe impact on traveling stability of the vehicle on a corresponding road surface, and more control parameters need to be adjusted. The vehicle control apparatus may intelligently adapt the at least one torque control strategy for the first scenario, to reduce impact of the road surface characteristic of the area corresponding to the first scenario on the traveling stability of the vehicle, so that after the control parameter of the vehicle-related component is adjusted according to the at least one torque control strategy, the vehicle can travel safely.

In an example, during specific implementation, for example, different value ranges of the first parameter and a torque control strategy that can be adapted to each value range may be pre-designed. The vehicle control apparatus may adapt, based on an actually obtained value range corresponding to the first parameter value associated with the first scenario, at least one torque control strategy for the first scenario. For example, the first parameter value is the slip rate. The pre-designed value range of the first parameter may include, for example, 20% to 40%, 40% to 60%, or 60% to 80%. The range of 20% to 40% may be associated with the control strategy c, or d, or c+d. For example, the range of 40% to 60% may be associated with the control strategy a+c, a+d, b+d, b+c, a+c+d, or b+c+d. For example, the range of 60% to 80% may be associated with the control strategy a+b+c+d.

The "speed bump" scenario shown in Table 1 is used as an example. When a front wheel of the vehicle travels through the speed bump, a slip rate of a corresponding axle changes abruptly, for example, reaches 30%. To effectively control the slip rate to continue to increase, the vehicle control apparatus may adapt the control strategy c for the scenario, to distribute torque of the corresponding axle of the front wheel that has passed through the speed bump to an axle whose slip rate does not exceed the limit. In this way, the total torque value remains unchanged. When the control strategy c is used to perform inter-axle torque transfer and redistribution, during braking, a higher hydraulic braking proportion can effectively suppress an increase of the slip rate, and a lower electric braking proportion can effectively reduce an instability risk.

A specific decision-making process performed according to the at least one torque control strategy associated with the first scenario in Manner (2) is similar to the solution described above with reference to Manner (1). For specific implementation details, refer to the related descriptions in Manner (1). Details are not described herein again.

It should be noted that, because an actual traveling status of the vehicle is very complex, to more accurately ensure smoothness and comfort during vehicle traveling, in another optional implementation, the vehicle control apparatus (for example, the VDC or the VCU) may further obtain a traveling parameter of the vehicle. The traveling parameter may include but is not limited to at least one of the following: a traveling speed, a wheel speed, a yaw rate, longitudinal acceleration, a roll angle, a steering wheel angle, a heading angle, accelerator pedal opening information, brake pedal opening information, a gear, a driving mode, a road mode, and a battery state of charge SOC. When S320 is implemented, the vehicle control apparatus may specifically identify, based on the road surface characteristic and the traveling parameter, the first scenario in which the vehicle is located.

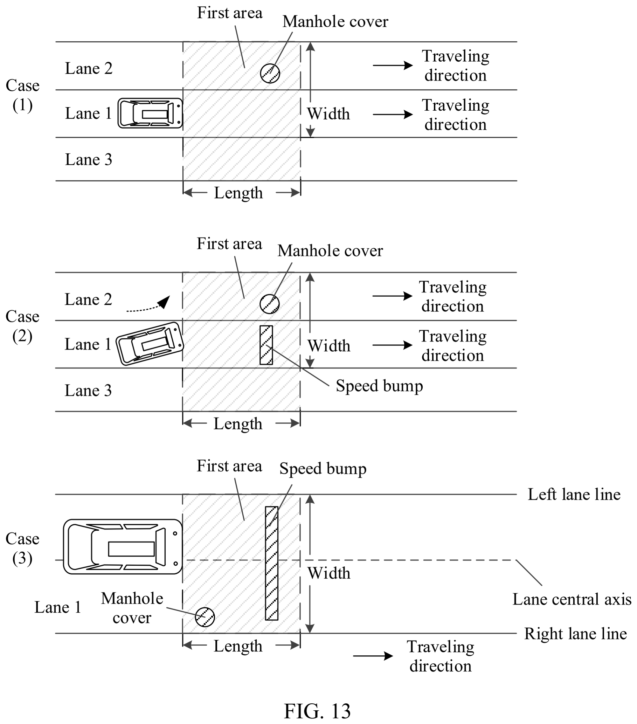

For example, as shown in Case (1) in FIG. 13, for example, the first area includes the lane 1 in which the vehicle is located and an area in front of the adjacent lanes 2 and 3. That is, a manhole cover is included on a road surface of the lane 2, and this corresponds to the scenario B shown in Table 1. Although the vehicle control apparatus may identify the scenario B based on sensing data, when the vehicle control apparatus predicts, with reference to the traveling parameter (for example, the steering wheel angle, the yaw rate, the steering wheel angle, the longitudinal acceleration, the lateral acceleration, or the vehicle speed) of the vehicle, that the vehicle has no lane change intent, the manhole cover located on the lane 2 does not affect stability of the vehicle traveling on the lane 1. Therefore, with reference to the road surface characteristic of the first area and the traveling parameter of the vehicle, the vehicle control apparatus may still determine that an area of the lane 1 into which the vehicle is to travel at the future first moment is not the scenario shown in Table 1, and the control parameter of the vehicle-related component temporarily does not need to be adjusted.

As shown in Case (2) in FIG. 13, for example, the first area includes the lane 1 in which the vehicle is located and an area in front of the adjacent lanes 2 and 3. A manhole cover is included on a road surface in front of the lane 2, which corresponds to the scenario B shown in Table 1. A speed bump is included on a road surface in front of the lane 1, which corresponds to the scenario A shown in Table 1. Although the vehicle control apparatus may identify the scenario A and the scenario B based on sensing data, when the vehicle control apparatus predicts, with reference to the traveling parameter (for example, the steering wheel angle, the yaw rate, the steering wheel angle, the longitudinal acceleration, the lateral acceleration, and the vehicle speed) of the vehicle, that the vehicle currently has an intent of changing from the lane 1 to the lane 2, the manhole cover located on the lane 2 is more likely to affect stability of the vehicle. Therefore, with reference to the road surface characteristic of the first area and the traveling parameter of the vehicle, the vehicle control apparatus may use the scenario A as the first scenario, and determine the target torque control information based on the first scenario.

As shown in Case (3) in FIG. 13, for example, the first area includes an area in front of the lane 1 in which the vehicle is located. A manhole cover and a speed bump are included on a road surface in front of the lane 1, which respectively correspond to the scenario A and the scenario B shown in Table 1. Although the vehicle control apparatus may identify the scenario A and the scenario B based on obtained sensing data, the vehicle control apparatus predicts, with reference to the traveling parameter of the vehicle, that the vehicle travels closer to a left lane line of the lane 1, and the manhole cover is closer to a right lane line of the lane 1. There is a high probability that the vehicle travels in a current traveling direction and does not pass through a road surface on which the manhole cover is located. Therefore, with reference to the road surface characteristic of the first area and the traveling parameter of the vehicle, the vehicle control apparatus may use the scenario B as the first scenario, and determine the target torque control information based on the first scenario.

In some other embodiments, the vehicle control apparatus may further obtain a difference between a wheel speed of a front axle and a wheel speed of a rear axle, to assist in determining the first scenario in which the vehicle is located. For example, if a difference proportion of wheel speeds of front and rear wheels of the vehicle is between 0 and 10%, there is a high probability that the vehicle is located on a regular road surface instead of in a special scenario. If a difference proportion of wheel speeds of front and rear wheels of the vehicle is between 10% and 30%, there is a high probability that the vehicle is in the scenario A, the scenario B, the scenario C, the scenario D, or the scenario E shown in Table 1. If a difference proportion of wheel speeds of front and rear wheels of the vehicle is between 30% and 100%, there is a high probability that the vehicle is in the scenario F or the scenario G shown in Table 1. If a difference proportion of wheel speeds of left and right wheels of the vehicle is between 0 and 10%, there is a high probability that the vehicle is on a regular road surface instead of in a special scenario. If a difference proportion of wheel speeds of left and right wheels of the vehicle is between 10% and 30%, there is a high probability that the vehicle is in the scenario A, the scenario B, the scenario C, the scenario D, or the scenario E shown in Table 1. If a difference proportion of wheel speeds of left and right wheels of the vehicle is between 30% and 100%, there is a high probability that the vehicle is in the scenario F or the scenario G shown in Table 1.

The different cases described above with reference to FIG. 13 are merely examples for describing different road conditions and actual traveling situations. During actual application, the first scenario may be identified with reference to other possible information. Details are not described herein again.

In this embodiment of this application, for example, the target torque control information may include a target control strategy in one or more control strategies associated with the first scenario. Alternatively, the target torque control information may include a value of an adjusted corresponding control parameter calculated by the vehicle control apparatus based on the one or more torque control strategies associated with the identified first scenario, and includes but not limited to an adjusted torque extreme value, an adjusted torque gradient, an adjusted torque distribution proportion, or an adjusted electro-hydraulic distribution proportion.

S330: Control, based on the target torque control information, the vehicle to travel.

For example, the target torque control information includes an adjusted value of a corresponding control parameter. For example, if the first scenario identified by the vehicle control apparatus based on the road surface characteristic of the first area corresponds to the speed bump scenario in which the code A is located, the vehicle control apparatus may calculate, based on a corresponding speed bump level, an adjusted torque distribution proportion and an adjusted electro-hydraulic distribution proportion by using the expression (3) and the expression (4) described above, and provide the adjusted torque distribution proportion and the adjusted electro-hydraulic distribution proportion as the target torque control information to the vehicle-related component, to assist in controlling the vehicle to travel safely and stably.

Alternatively, for example, if the first scenario identified by the vehicle control based on the road surface characteristic of the first area corresponds to the wet epoxy scenario in which the code G is located, the vehicle control apparatus may calculate, based on a corresponding wet epoxy level, an adjusted electro-hydraulic distribution proportion by using the expression (4) described above, and provide the adjusted electro-hydraulic distribution proportion as the target torque control information to the vehicle-related component, to assist in controlling the vehicle to travel safely and stably.

So far, the vehicle control method in this application has been described with reference to the foregoing method embodiment. In the method, the vehicle control apparatus may identify, based on the sensing data, the first scenario in which the vehicle is located, and determine the target torque control information according to the at least one torque control strategy associated with the first scenario, to adaptively adjust the control parameter of the vehicle-related component, thereby reducing vehicle instability, and ensuring smoothness and stability of vehicle traveling.

In the foregoing method embodiments of this application, only an example in which the MDC, the VCU, or the VDC is used as the vehicle control apparatus is used for description, and a product form of the vehicle control apparatus is not limited. In some embodiments, because a computing function of a cloud server is more powerful, the vehicle control apparatus may alternatively be configured in the cloud server. The cloud server may obtain at least one traveling parameter from a sensing system of the vehicle by using a communication network, and after obtaining, through calculation, adjusted control parameters of different control components to be provided to the vehicle, send adjusted control parameters of a same control component to the vehicle by using the communication network, to implement vehicle control. Details are not described herein again.

An embodiment of this application further provides a vehicle control apparatus. The vehicle control apparatus may be configured to perform the foregoing method embodiment. For related characteristics, refer to the foregoing method embodiment. Details are not described herein again.

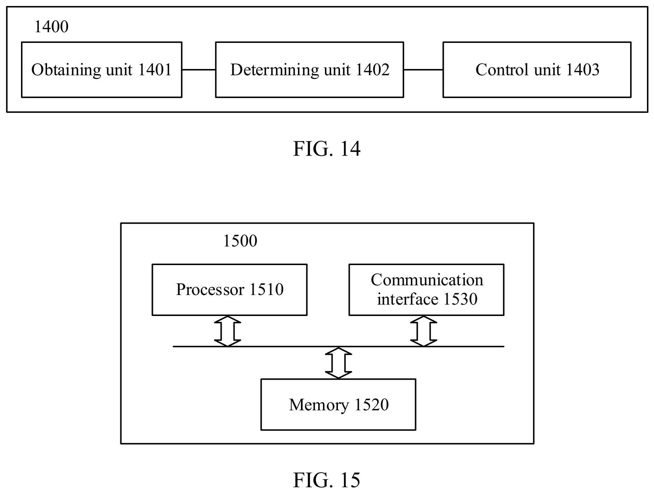

As shown in FIG. 14, in an example, the vehicle control apparatus 1400 may include: an obtaining unit 1401, configured to obtain a road surface characteristic of a first area, where the first area includes an area into which a vehicle is to travel at a future first moment; a determining unit 1402, configured to determine target torque control information based on the road surface characteristic; and a control unit 1403, configured to control, based on the target torque control information, the vehicle to travel. Alternatively, in another example, the vehicle control apparatus 1400 may include: an obtaining unit 1401, configured to obtain first scenario information, where the first scenario information indicates a first scenario of a vehicle; a determining unit 1402, configured to determine target torque control information according to at least one torque control strategy associated with the first scenario; and a control unit 1403, configured to control, based on the target torque control information, the vehicle to travel. For a specific implementation, refer to the method steps implemented by the vehicle control apparatus in the foregoing method embodiment. Details are not described herein again.

Division of the units in the apparatus is merely division of logical functions. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuit, and functions of some or all units may be implemented by designing hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All units of the foregoing apparatuses may be implemented in a form of software invoked by a processor, or all units may be implemented in a form of hardware circuit, or some units may be implemented in a form of software invoked by a processor, and a remaining part may be implemented in a form of hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

In a simple embodiment, a person skilled in the art may figure out that the vehicle control apparatus in the foregoing embodiment may be in a form shown in FIG. 15.

The apparatus 1500 shown in FIG. 15 includes at least one processor 1510 and a communication interface 1530. In an optional design, the apparatus 1500 may further include a memory 1520. A specific connection medium between the processor 1510 and the memory 1520 is not limited in embodiments of this application.

In the apparatus shown in FIG. 15, when communicating with another device, the processor 1510 may transmit data through the communication interface 1530.

When the vehicle control apparatus is in a form shown in FIG. 15, the processor 1510 in FIG. 15 may invoke computer-executable instructions stored in the memory 1520, so that the apparatus 1500 can perform any one of the foregoing method embodiments.

An embodiment of this application further relates to a chip system. The chip system includes a processor, configured to invoke a computer program or computer instructions stored in a memory, to enable the processor to perform the method according to any one of the foregoing embodiments.

In a possible implementation, the processor is coupled to the memory through an interface.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored in a memory, to enable the processor to perform the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system-on-a-chip (system-on-a-chip, SoC), or may be a CPU, or may be a network processor (network processor, NP), or may be a micro controller unit (micro controller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

Embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of the embodiments of this application provided that they fall within the scope of protection defined by the following claims and their equivalent technologies. In embodiments of this application, unless otherwise stated or there is a logic conflict, terms and/or descriptions between embodiments are consistent and may be mutually referenced, and technical characteristics in different embodiments may be combined into a new embodiment based on an internal logical relationship thereof.

## Claims

1. A vehicle control method, comprising:
obtaining a road surface characteristic of a first area, wherein the first area comprises an area into which a vehicle is to travel at a future first moment;
determining target torque control information based on the road surface characteristic; and
controlling, based on the target torque control information, the vehicle to travel.

2. The method according to claim 1, wherein the determining the target torque control information based on the road surface characteristic comprises:
identifying, based on the road surface characteristic, a first scenario in which the vehicle is located; and
determining the target torque control information according to at least one torque control strategy associated with the first scenario.

3. The method according to claim 2, wherein the method further comprises:
determining, in any one of the following manners, the at least one torque control strategy associated with the first scenario:
determining, based on first information, the at least one torque control strategy associated with the first scenario, wherein the first information is used to describe an association relationship between different road surface scenarios and different torque control strategies; or
determining, based on a first parameter value associated with the first scenario, the at least one torque control strategy associated with the first scenario, wherein the first parameter value represents a degree of impact of the road surface characteristic of the first area on traveling stability of the vehicle.

4. The method according to claim 3, wherein the first parameter value comprises a road adhesion coefficient and/or a slip rate.

5. The method according to any one of claims 2 to 4, wherein the at least one torque control strategy associated with the first scenario is used to adjust at least one of the following control parameters:
a total torque value, a torque gradient, an inter-axle torque distribution proportion, or a brake electro-hydraulic distribution proportion.

6. The method according to claim 5, wherein each torque control strategy is associated with an adjustment coefficient, and the adjustment coefficient is used to decrease a value of a control parameter to be adjusted according to the torque control strategy.

7. The method according to any one of claims 2 to 6, wherein the identifying, based on the road surface characteristic, the first scenario in which the vehicle is located comprises:
matching the road surface characteristic with at least one piece of scenario information, to identify the first scenario, wherein the scenario information is used to describe a road surface scenario, an area corresponding to the first scenario comprises a first road surface characteristic, a second parameter value associated with the first road surface characteristic is greater than or equal to a first threshold, and the second parameter value represents a degree of impact of the first road surface characteristic on the traveling stability of the vehicle.

8. The method according to claim 7, wherein the method further comprises:
receiving the at least one piece of scenario information from a cloud server; or
receiving the at least one piece of scenario information from user equipment UE.

9. The method according to any one of claims 2 to 8, wherein the method further comprises:
obtaining a traveling parameter of the vehicle; and
the identifying, based on the road surface characteristic, the first scenario in which the vehicle is located comprises:
identifying, based on the road surface characteristic and the traveling parameter, the first scenario in which the vehicle is located.

10. The method according to any one of claims 1 to 9, wherein the obtaining the road surface characteristic of the first area comprises:
obtaining the road surface characteristic of the first area via at least one sensor associated with the vehicle.

11. The method according to any one of claims 1 to 10, wherein the controlling, based on the target torque control information, the vehicle to travel comprises:
sending a control instruction to a target component of the vehicle, wherein the target component comprises at least one of the following: a motor control unit, an electronic stability controller ESC, or a brake system.

12. A vehicle control method, comprising:
obtaining first scenario information, wherein the first scenario information indicates a first scenario of a vehicle;
determining target torque control information according to at least one torque control strategy associated with the first scenario; and
controlling, based on the target torque control information, the vehicle to travel.

13. The method according to claim 12, wherein the method further comprises:
determining, in any one of the following manners, the at least one torque control strategy associated with the first scenario:
determining, based on first information, the at least one torque control strategy associated with the first scenario, wherein the first information is used to describe an association relationship between different road surface scenarios and different torque control strategies; or
determining, based on a first parameter value associated with the first scenario, the at least one torque control strategy associated with the first scenario, wherein the first parameter value represents a degree of impact of a road surface characteristic of the first area on traveling stability of the vehicle.

14. The method according to claim 13, wherein the first parameter value comprises a road adhesion coefficient and/or a slip rate.

15. The method according to any one of claims 12 to 14, wherein the at least one torque control strategy associated with the first scenario is used to adjust at least one of the following control parameters:
a total torque value, a torque gradient, an inter-axle torque distribution proportion, or a brake electro-hydraulic distribution proportion.

16. The method according to claim 15, wherein each torque control strategy is associated with an adjustment coefficient, and the adjustment coefficient is used to decrease a value of a control parameter to be adjusted according to the torque control strategy.

17. The method according to any one of claims 12 to 16, wherein the obtaining the first scenario information comprises:
receiving the first scenario information from an intelligent driving domain control unit, wherein the first scenario is obtained through identifying based on the road surface characteristic of the first area, and the first area comprises an area into which the vehicle is to travel at a future first moment.

18. The method according to any one of claims 12 to 16, wherein the method further comprises:
obtaining a traveling parameter of the vehicle; and
the obtaining the first scenario information comprises:
performing scenario identification based on the traveling parameter and the road surface characteristic of the first area, to obtain the first scenario information, wherein the first area comprises an area into which the vehicle is to travel at a future first moment.

19. The method according to any one of claims 12 to 18, wherein the controlling, based on the target torque control information, the vehicle to travel comprises:
sending a control instruction to a target component of the vehicle, wherein the target component comprises at least one of the following: a motor control unit, an electronic stability controller ESC, or a brake system.

20. A vehicle control apparatus, comprising:
an obtaining unit, configured to obtain a road surface characteristic of a first area, wherein the first area comprises an area into which a vehicle is to travel at a future first moment;
a determining unit, configured to determine target torque control information based on the road surface characteristic; and
a control unit, configured to control, based on the target torque control information, the vehicle to travel.

21. A vehicle control apparatus, comprising:
an obtaining unit, configured to obtain first scenario information, wherein the first scenario information indicates a first scenario of a vehicle;
a determining unit, configured to determine target torque control information according to at least one torque control strategy associated with the first scenario; and
a control unit, configured to control, based on the target torque control information, the vehicle to travel.

22. An electronic device, comprising a processor, wherein the processor is coupled to a memory; and
the processor is configured to execute a computer program or instructions stored in the memory, so that the electronic device performs the method according to any one of claims 1 to 11, or the electronic device performs the method according to any one of claims 12 to 19.

23. A vehicle, comprising a unit configured to implement the method according to any one of claims 1 to 11, or comprising a unit configured to implement the method according to any one of claims 12 to 19.

24. A readable storage medium, comprising a program or instructions, wherein when the program or the instructions are executed, the method according to any one of claims 1 to 11 is performed, or when the program or the instructions are executed, the method according to any one of claims 12 to 19 is performed.

25. A computer program product, wherein when the computer program product runs on a computer, the computer is enabled to perform the method according to any one of claims 1 to 11, or the computer is enabled to perform the method according to any one of claims 12 to 19.
